# EUROPEAN PATENT APPLICATION

(11) **EP 0 896 213 A2**
(43) Date of publication of application: **10.02.1999**
(21) Application number: 98306345.4
(22) Date of filing: 07.08.1998
(51) Int. Cl.: G01N 1/24, G01N 1/04

(54) **Apparatus for effective collection of explosive and narcotic samples**

(30) Priority: 07.08.1997 CA 2212472
(71) Applicant: Scintrex Limited, Concord, Ontario L4K 1B5 (CA)
(72) Inventor: Nadler, Shachar, Bolton, Ontario, L7E 4A3 (CA)
(74) Representative: Naismith, Robert Stewart

(57) **Abstract**

An apparatus for collecting particulates and vapours from a contaminated surface includes a manifold having at least one nozzle receiving gas from a supply and directing at least one jet of gas onto a target area of the surface thereby to dislodge particulates and vapours from the surface. The manifold also has an orifice therein, one end of which is adjacent the target area. A pump draws gas and particulates and vapours dislodged from the target area of the surface into the orifice thereby to collect the particulates and vapours for analysis. A method for collecting particulates and vapours is also disclosed.

## Description

### Field of the Invention

The present invention relates to an apparatus and method for collecting samples of explosive and narcotic substances from a contaminated surface.

### Background of the Invention

The direct detection of common explosives and narcotics is limited by their very low vapour pressure. The task is further complicated in that often these substances are bound by a host matrix such as for example, plastics for explosives and sugars for narcotics. As with most substances, the vapour pressure of explosive and narcotic substances is strongly temperature dependent. Heating a sample surface that may contain traces of explosives or narcotics is a routine method of increasing the vapour pressure of these substances prior to collecting vapours and introducing the collected vapours to an analytical device.

However, heating alone is not sufficient to ensure adequate collection of vapours from particulates of explosives or narcotics, and excessive heating is unacceptable as it may cause damage to the surface being tested as well as to human tissue.

Other sampling means that have been employed entail the use of vacuum-based collectors of particulates of explosives or narcotics. These have proven less than ideal for this task, as some particulates such as those of plastic-based explosives, tend to adhere to surfaces. Accordingly, improvements in the collection of vapours and particulates from explosive and narcotic substances are desired.

It is therefore an object of the present invention to provide a novel apparatus and method for collecting particulates and vapours such as for example, samples of explosive and narcotic substances from a surface.

### Summary of the Invention

Broadly stated, the present invention provides an apparatus and method for collecting particulates and vapours such as samples of explosive and narcotic substances from a contaminated surface. In one aspect, the present invention provides an apparatus for collecting particulates and vapours from a contaminated surface comprising:
a manifold having at least one nozzle receiving gas from a supply and directing at least one jet of gas onto a target area of said surface thereby to dislodge particulates and vapours from said surface, said manifold also having an orifice therein, one end of said orifice being adjacent said target area; and
a pump to draw gas and particulates and vapours dislodged from the target area of said surface into said orifice thereby to collect said particulates and vapours for analysis.

Preferably, the manifold includes a plurality of nozzles, each directing a jet of gas onto the target area of the surface. The nozzles are oriented so that the jets of gas transport dislodged particulates and vapours towards the orifice and are arranged in a ring surrounding the orifice.

In one embodiment, the jets of gas create turbulence at the target area of the surface. This is achieved by pulsating the jets of gas or supplying gas to the nozzles in succession.

In an alternative embodiment, the manifold further includes at least one light source for directing optical energy onto the target area of the surface. Preferably, the at least one light source includes an array of fiber optic conduits extending from an external source of laser radiation. The fiber optic conduits are arranged on the manifold so that beams of laser radiation emanating from the fiber optics conduits converge in the target area.

If desired, the flow of gas through the manifold which descends on the contaminated surface may be recycled by using a single pump to enhance the concentration of particulates and vapours dislodged from the target area of the surface. In addition, the jets of gas may be pre-heated to induce evaporation from particulates dislodged from the contaminated surface.

According to one aspect of the present invention there is provided a method for collecting particulates and vapours from a contaminated surface comprising the steps of:
directing at least one jet of gas onto a target area of said surface thereby to dislodge particulates and vapor from said surface; and
drawing gas and dislodged particulates and vapours from said target area into an orifice having one end adjacent said target area thereby to collect particulates and vapours for analysis.

The present invention provides advantages in that particulates and vapours can be collected from a surface for analysis effectively and without contacting the surface.

### Brief Description of the Drawings

Embodiments of the present invention will now be described more fully with reference to the accompanying drawings in which:
Figure 1 is a cross-section layout of an apparatus for collecting particulates and vapours from a contaminated surface in accordance with the present invention; and
Figure 2 is a cross-section layout of an alternative embodiment of an apparatus for collecting particulates and vapours from a contaminated surface in accordance with the present invention.

### Detailed Description of the Preferred Embodiments

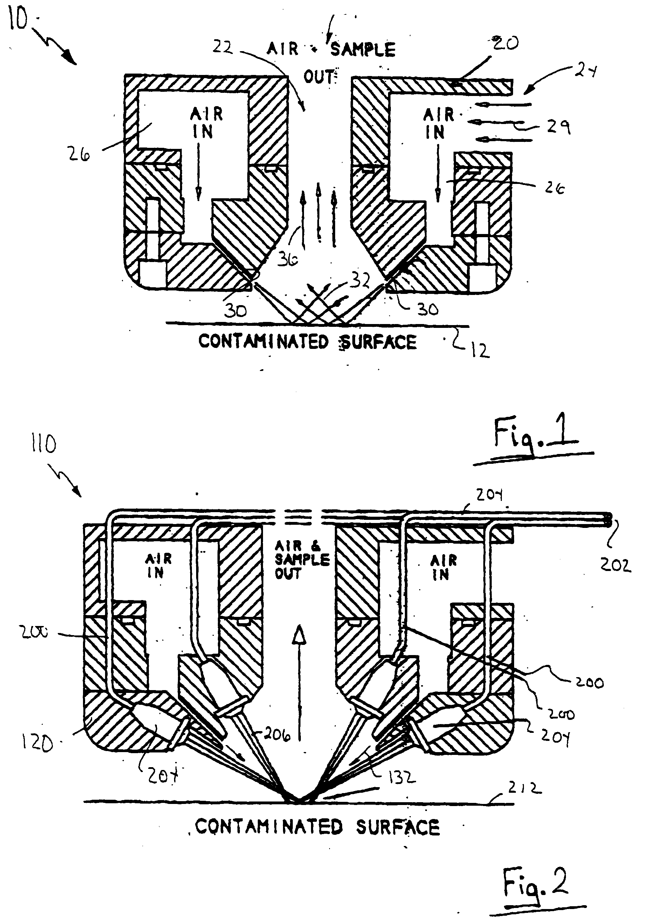

Referring now to Figure 1, an apparatus for collecting particulates and vapours such as for example samples of explosive and narcotic substances from a contaminated surface is shown and is generally indicated to by reference numeral 10. Apparatus 10 may be described as a "push-pull collection manifold" and is designed to be placed over a contaminated surface 12 to dislodge and draw particulates and vapours therefrom without touching the surface. Apparatus 10 includes an annular manifold 20 defining a central orifice 22. An intake 24 is provided in the manifold 20 and communicates with its hollow interior 26. An external motor-driven pump 28 is connected to the intake 24 to force air 29 into the hollow interior 26 of the manifold.

A circular ring of apertures defining nozzles 30 are provided in the manifold 20. Each nozzle 30 communicates with the hollow interior 26. The nozzles 30 are oriented in a selected focused angle so that jets of air 32 descend from the manifold 20 via the nozzles and contact a desired target area of the contaminated surface 12 to dislodge particulates and vapours therefrom.

A collection pump 34 pulls air 36 through the orifice 22 away from the surface to collect dislodged particulates and vapours and direct them to a suitable collection device or detection mechanism (not shown).

If desired, the performance of the apparatus 10 may be enhanced using one or more of the following techniques. The jets of air descending from the manifold 20 and collected by the collection pump 34 may be recycled by using a single pump to enhance the concentration of particulates and vapours dislodged from the target area of the surface 12. In this manner, air collected from the central orifice 22 is directed to the intake 24. Also, air directed into the intake 24 by the external pump 28 may be pre-heated to induce evaporation from particulates.

In addition, the external pump 28 may be pulsed to introduce turbulence to the jets of air thereby augmenting agitation of the contaminated surface 12. This can be achieved by pulsating the supply of air to the manifold 20 or by supplying air to the nozzles 30 in succession.

Although the apparatus 10 has been described as having a single ring of nozzles, those of skill in the art will appreciate that the manifold may include several staggered rings of nozzles configured to discharge jets of air at different pressures. Also, the external pump 28 can be replaced by a source of compressed air supplying air under pressure to the manifold 20.

Referring now to Figure 2, an alternative embodiment of an apparatus for collecting particulates and vapours from a contaminated surface in accordance with the present invention is shown. In this embodiment, like reference numerals will be used to indicate like components of the previous embodiment with a "100" added for clarity. As can be seen, the manifold 220 is similar to that of the previous embodiment but further includes circular arrays of fiber optic conduits 200 therein extending from an external source of laser radiation 202. The arrays of fiber optic conduits 200 are coupled to a single laser by means of a beam splitter/multiplexer mechanism. The fiber optic conduits 200 terminate at lens assemblies 204 arranged in staggered rings within the manifold 120. The lens assemblies 204 are arranged so that light beams 206 emerging from the lens assemblies 204 converge in the same focal area as the jets of air 132.

It has been recently reported in the literature that selective desorption of explosives and other non-volatile molecules is feasible using laser beams, for example in the 226 to 337 nm UV wavelength region. Alternatively, the laser radiation may be in the infrared wavelength region. It has been demonstrated that as a function of wave length, intensity and mode of operation, a laser beam can induce an explosives sample to evaporate, and/or ionize and/or fragment.

It is estimated that by addition of the means for laser desorption, the efficiency of sample collection of non-volatile particulates of explosives or narcotics can be improved by about one order of magnitude (10 fold, quantitatively). For example, ion mobility-based detection systems require ionization of the sample at the input. Similarly, sample fragmentation is one of the early steps in systems that are based on the electrochemical detection of NO or NO₂ vapours, produced by the fragmentation of particulates of explosive molecules.

Although particular embodiments of the present invention have been described, those of skill in the art will appreciate that variations and modifications may be made without departing from the spirit and scope thereof as defined by the appended claims.

## Claims

1. An apparatus for collecting particulates and vapours from a contaminated surface comprising:
a manifold having at least one nozzle receiving gas from a supply and directing at least one jet of gas onto a target area of said surface thereby to dislodge particulates and vapours from said surface, said manifold also having an orifice therein, one end of said orifice being adjacent said target area; and
a pump to draw gas and particulates and vapours dislodged from the target area of said surface into said orifice thereby to collect said particulates and vapours for analysis.

2. An apparatus as defined in claim 1 wherein said manifold includes a plurality of nozzles, each of said nozzles directing a jet of gas onto the target area of said surface.

3. An apparatus as defined in claim 2 wherein said nozzles are oriented so that said jets of gas transport dislodged particulates and vapour towards said orifice.

4. An apparatus as defined in claim 3 wherein said nozzles are arranged in a ring surrounding said orifice.

5. An apparatus as defined in claims 2 wherein said jets of gas create turbulence at the target area of said surface.

6. An apparatus as defined in claim 2 further including means for heating said gas.

7. An apparatus as defined in claim 2 wherein said manifold further includes at least one light source for directing optical energy onto the target area of said surface.

8. An apparatus as defined in claim 7 wherein said manifold includes a plurality of light sources arranged in at least one ring surrounding said orifice.

9. An apparatus as defined in claim 2 wherein said supply of gas is a compressed air supply.

10. An apparatus as defined in claim 2 wherein said gas is supplied to said nozzles by way of a motor driven pump.

11. An apparatus as defined in claim 2 wherein said pump recirculates gas drawn into said orifice to said nozzles to enhance the concentration of particulates and vapours dislodged from the target area of said surface.

12. An apparatus as defined in claim 2 wherein said particulates and vapours result from explosive and narcotic substances on said surface.

13. A method for collecting particulates and vapours from a contaminated surface comprising the steps of:
directing at least one jet of gas onto a target area of said surface thereby to dislodge particulates and vapours from said surface; and
drawing gas and dislodged particulates and vapours from said target area into an orifice having one end adjacent said target area thereby to collect particulates and vapours for analysis.

14. The method of claim 13 further comprising the step of directing a plurality of jets of gas onto said target area of said surface.

15. The method of claim 14 further comprising the step of directing said jets of gas onto said target area so that dislodged particulates and vapours are directed towards said orifice.
